# EUROPEAN PATENT APPLICATION

(11) **EP 3 293 010 A1**
(43) Date of publication of application: **14.03.2018**
(21) Application number: 16188656.9
(22) Date of filing: 13.09.2016
(51) Int. Cl.: B41M 1/26, B41M 1/40, B41M 3/00, B41M 3/14, B41M 3/16, B41M 5/00, B44D 2/00, B44D 5/00

(54) **PATTERNING OF NATURAL PRODUCTS**

(71) Applicant: Omya International AG, 4665 Oftringen (CH)
(72) Inventor: BOLLSTRÖM, Roger, 4800 Zofingen (CH); BOTTY, Gilbert, 6226 Maastricht (NL); HUNZIKER, Philipp, Loveland, OH 45140 (US); SCHOELKOPF, Joachim, 5727 Oberkulm (CH)
(74) Representative: Müller-Dyck, Martina

(57) **Abstract**

The present invention relates to a method for creating a pattern on a natural material of human or animal origin, wherein a liquid treatment composition comprising at least one acid is deposited on a natural material, which comprises calcium carbonate.

## Description

The present invention relates to the field of marking natural materials, and in particular, to a method of creating a pattern on a natural material of human or animal origin, a natural material comprising a pattern obtainable by said method and its use.

Natural materials of human or animal origin may be marked with identifying images or pattern. Eggs, for example, may contain marks indicating the distinguishing number of the producer, the laying date, how the laying hens are fed and the regional origin of the eggs. Typically, vegetable dyes or other water-soluble ink products are used to mark eggs. Such inks, however, have the tendency to leak into the interior of the egg, to wash off or to fade.

There is also an increasing demand for marking protected or valuable natural objects such as ivory or pearls, which can be used to verify the origin of the product. It would also be helpful if natural materials such as bones, teeth, fossils, tusks, or shells could be marked in a permanent non-destructive way, for example, for archiving purposes or in order to provide an export and import control or tracing ability. Usually, such materials are only marked by glued-applied labels or are not marked at all, but are shipped together with separate certificates. However, glued-on labels or certificates can get lost or may be replaced by forged or falsified labels or certificates.

DE 43 22 252 A1 describes a method of marking eggs, wherein the markings on the eggshell are created by means of a laser marking device by removing a defined thickness of the eggshell by means of the laser light at locations desired for producing the marking. A method of marking an egg comprising the step of applying radiant energy to the shell of an egg so as to cause discoloration of the eggshell is disclosed in US 2006/0138105 A1.

EP 2 949 813 A1 discloses a method of manufacturing a surface-modified material, wherein a liquid treatment composition comprising an acid is applied onto a surface-coated substrate comprising a coating layer with a salifiable alkaline or alkaline earth compound.

For completeness, the applicant would like to mention the unpublished European patent application with filing number 15 159 107.0 in its name, which relates to a method of creating a hidden pattern, the unpublished European patent application with filing number 15 159 109.6 in its name, which relates to an inkjet printing method, the unpublished European patent application with filing number 15 196 085.3 in its name, which relates to a method of tagging a substrate, and the unpublished European patent application with filing number 15 196 143.0 in its name, which relates to a printed watermark.

In view of the foregoing, there remains a need in the art for permanently marking natural materials.

Accordingly, it is an object of the present invention to provide a method for marking a natural material of human or animal origin. It is also desirable that the method is easy to implement in existing print facilities. It is also desirable that the method is suitable for both small and large production volume. Furthermore, it is desirable that the method can be used for a great variety of natural materials, and does not affect the properties of the materials in a negative way. Moreover, it is desirable that the marking is permanent and difficult to manipulate.

It is also an object of the present invention to provide a natural material of human or animal origin with an identifying image or pattern, which allows a simple and immediate authentication. It is also desirable that the identifying image or pattern is observable for the human eye and/or can be reliably detected with standard measurement instruments. Moreover, it is also desirable that the identifying image or pattern can be equipped with further functionalities making it machine readable and is combinable with prior art security elements.

The foregoing and other objects are solved by the subject-matter as defined herein in the independent claims.

According to one aspect of the present invention, a method for creating a pattern on a natural material of human or animal origin is provided comprising the following steps:
a) providing a natural material of human or animal origin, wherein the natural material comprises at least one external surface comprising calcium carbonate,
b) providing a liquid treatment composition comprising at least one acid, and
c) applying the liquid treatment composition onto the at least one external surface of the natural material to form a pattern.

According to another aspect of the present invention, a natural material of human or animal origin comprising a pattern, obtainable by a method according to the present invention, is provided.

According to still another aspect of the present invention, use of a natural material according to the present invention in tactile applications, braille applications, labelling applications, security applications, in overt security elements, in covert security elements, in microlettering, in micro imaging, in decorative applications, in artistic applications, in visual applications, or in packaging applications is provided.

Advantageous embodiments of the present invention are defined in the corresponding sub-claims.

According to one embodiment, the natural material is selected from the group consisting of a reptile eggshell, a bird eggshell, a monotreme eggshell, a tooth, a bone, a tusk, ivory, a pearl, nacre, a mollusc shell, a cuttlebone, a gladius, a corallite, a crustacean exoskeleton, or a calcified fossil, preferably the natural material is selected from the group consisting of a bird eggshell, a tooth, a bone, a tusk, ivory, a pearl, nacre, or a calcified fossil, more preferably the natural material is a bird eggshell, and most preferably the natural material is a quail eggshell, a chicken eggshell, a duck eggshell, a goose eggshell, or an ostrich eggshell. According to another embodiment the natural material comprises the calcium carbonate in an amount at least 1 wt.-%, based on the total weight of the natural material, preferably at least 5 wt.-%, more preferably at least 10 wt.-%, even more preferably at least 25 wt.-%, and most preferably at least 50 wt.-%.

According to one embodiment the at least one acid is selected from the group consisting of hydrochloric acid, sulphuric acid, sulphurous acid, phosphoric acid, citric acid, oxalic acid, acetic acid, formic acid, sulphamic acid, tartaric acid, phytic acid, boric acid, succinic acid, suberic acid, benzoic acid, adipic acid, pimelic acid, azelaic acid, sebaic acid, isocitric acid, aconitic acid, propane-1,2,3-tricarboxylic acid, trimesic acid, glycolic acid, lactic acid, mandelic acid, acidic organosulfur compounds, acidic organophosphorus compounds, HSO₄⁻, H₂PO₄⁻ or HPO₄²⁻, being at least partially neutralized by a corresponding cation selected from Li⁺, Na⁺, K⁺, Mg²⁺ or Ca²⁺, and mixtures thereof, preferably the at least one acid is selected from the group consisting of hydrochloric acid, sulphuric acid, sulphurous acid, phosphoric acid, oxalic acid, boric acid, suberic acid, succinic acid, sulphamic acid, tartaric acid, and mixtures thereof, more preferably the at least one acid is selected from the group consisting of sulphuric acid, phosphoric acid, boric acid, suberic acid, sulphamic acid, tartaric acid, and mixtures thereof, and most preferably the at least one acid is phosphoric acid and/or sulphuric acid.

According to one embodiment the liquid treatment composition further comprises a surfactant, an ink, a dye, fluorescent dye, a phosphorescent dye, an ultraviolet absorbing dye, a near infrared absorbing dye, a thermochromic dye, a halochromic dye, metal ions, transition metal ions, magnetic particles, or a mixture thereof. According to another embodiment the liquid treatment composition comprises the at least one acid in an amount from 0.1 to 100 wt.-%, based on the total weight of the liquid treatment composition, preferably in an amount from 1 to 80 wt.-%, more preferably in an amount from 3 to 60 wt.-%, and most preferably in an amount from 10 to 50 wt.-%.

According to one embodiment the pattern is an one-dimensional bar code, a two-dimensional bar code, a three-dimensional bar code, a security mark, a label, a number, a letter, an alphanumeric symbol, a logo, an image, a shape, a design, a braille marking, or a combination thereof. According to another embodiment the liquid treatment composition is applied by spray coating, inkjet printing, offset printing, flexographic printing, screen printing, plotting, contact stamping, rotogravure printing, spin coating, reverse gravure coating, slot coating, curtain coating, slide bed coating, film press, metered film press, blade coating, brush coating and/or a pencil, preferably by inkjet printing or spray coating. According to still another embodiment the method further comprises a step d) of applying a protective layer and/or a printing layer above the pattern.

According to one embodiment the pattern is a hidden pattern, which is invisible when viewed at a first angle relative to the at least one external surface of the natural material, and visible when viewed from a second angle relative to the at least one external surface of the natural material.

According to one embodiment the pattern differs from the at least one external surface in surface roughness, gloss, light absorption, electromagnetic radiation reflection, fluorescence, phosphorescence, magnetic property, electric conductivity, whiteness and/or brightness. According to another embodiment the pattern comprises a security feature and/or a decorative feature and/or a labelling, preferably an one-dimensional bar code, a two-dimensional bar code, a three-dimensional bar code, a security mark, a label, a number, a letter, an alphanumeric symbol, a logo, an image, a shape, a design, or a combination thereof. According to still another embodiment the pattern is a tactile pattern, and preferably a braille marking.

It should be understood that for the purpose of the present invention, the following terms have the following meaning.

For the purpose of the present invention, an "acid" is defined as Brønsted-Lowry acid, that is to say, it is an H₃O⁺ ion provider. An "acidic salt" is defined as an H₃O⁺ ion-provider, e.g., a hydrogen-containing salt, which is partially neutralised by an electropositive element. A "salt" is defined as an electrically neutral ionic compound formed from anions and cations. A "partially crystalline salt" is defined as a salt that, on XRD analysis, presents an essentially discrete diffraction pattern. In accordance with the present invention, pKₐ, is the symbol representing the acid dissociation constant associated with a given ionisable hydrogen in a given acid, and is indicative of the natural degree of dissociation of this hydrogen from this acid at equilibrium in water at a given temperature. Such pKₐ values may be found in reference textbooks such as Harris, D. C. "Quantitative Chemical Analysis: 3rd Edition", 1991, W.H. Freeman & Co. (USA), ISBN 0-7167-2170-8.

The term "liquid treatment composition" as used herein, refers to a composition in liquid form, which comprises at least one acid, and can be applied onto at least one external surface of the natural material of the present invention.

For the purpose of the present invention, the term "visible" means that an object fulfils the Rayleigh criteria of having a resolution of ≥ λ/2, and thus, can be recognized at a wave length λ using a suitable detection mean such as the human eye, optical microscope, scanning electron microscope, or UV-, IR-, X-ray-, or microwave detectors. The term "invisible" means that an object cannot be recognized under the conditions defined above. According to one embodiment, the term "visible" means that an object can be recognized by the un-aided or naked human eye, preferably under ambient light, and the term "invisible" means that an object cannot be recognized by the un-aided or naked human eye, preferably under ambient light.

For the purpose of the present invention, the term "surface-modified region" refers to a distinct spatial area, in which the calcium carbonate of the external surface has been at least partially converted into an acid salt as a result of the application of the liquid treatment composition comprising at least one acid. Accordingly, a "surface-modified region" in the meaning of the present invention comprises at least one acid salt of calcium carbonate of the external surface and the at least one acid comprised in the liquid treatment composition. The surface-modified region will have a different chemical composition and crystal structure compared to the original material.

In the present context, the term "natural material of human or animal origin" is to be understood as any material, which is derived from the body of a living or dead human or the body of a living or dead animal. Said term also includes products produced by animals such as eggshells or pearls. The term "animal" as used herein refers to eukaryotic organisms such as mammals, fish, birds, reptiles, amphibians, insects, or molluscs. Examples of natural material of human or animal origin are eggshells, teeth, bones, tusks, ivory, pearls, nacre, shells, cuttlebones, gladius, corallites, crustacean exoskeletons, or calcified fossils. The mentioned examples are, however, not of limitative character.

A "suspension" or "slurry" in the meaning of the present invention comprises insoluble solids and water, and optionally further additives, and usually contains large amounts of solids and, thus, is more viscous and can be of higher density than the liquid from which it is formed.

Where the term "comprising" is used in the present description and claims, it does not exclude other elements. For the purposes of the present invention, the term "consisting of" is considered to be a preferred embodiment of the term "comprising of". If hereinafter a group is defined to comprise at least a certain number of embodiments, this is also to be understood to disclose a group, which preferably consists only of these embodiments.

Whenever the terms "including" or "having" are used, these terms are meant to be equivalent to "comprising" as defined above.

Where an indefinite or definite article is used when referring to a singular noun, e.g. "a", "an" or "the", this includes a plural of that noun unless something else is specifically stated.

Terms like "obtainable" or "definable" and "obtained" or "defined" are used interchangeably. This, e.g., means that, unless the context clearly dictates otherwise, the term "obtained" does not mean to indicate that, e.g., an embodiment must be obtained by, e.g. the sequence of steps following the term "obtained" even though such a limited understanding is always included by the terms "obtained" or "defined" as a preferred embodiment.

According to the present invention a method for creating a pattern on a natural material of human or animal origin is provided. The method comprises the steps of (a) providing a natural material of human or animal origin, wherein the natural material comprises at least one external surface comprising calcium carbonate, (b) providing a liquid treatment composition comprising at least one acid, and (c) applying the liquid treatment composition onto the at least one external surface of the natural material to form a pattern.

In the following the details and preferred embodiments of the inventive method will be set out in more details. It is to be understood that these technical details and embodiments also apply to the patterned natural material of human or animal origin and the inventive use thereof.

### Method step a)

According to step a) of the method of the present invention, a natural material of human or animal origin is provided. It is a requirement of the present invention that the natural material comprises at least one external surface comprising calcium carbonate.

A "natural material of human or animal origin" in the meaning of the present invention is as any material, which is derived from the body of a living or dead human or the body of a living or dead animal. Said term also includes products produced by animals such as eggshells or pearls. The term "animal" as used herein refers to eukaryotic organisms such as mammals, fish, birds, reptiles, amphibians, insects, or molluscs.

The natural material may be selected from the group consisting of a reptile eggshell, a bird eggshell, a monotreme eggshell, a tooth, a bone, a tusk, ivory, a pearl, nacre, a mollusc shell, a cuttlebone, a gladius, a corallite, a crustacean exoskeleton, or a calcified fossil. According to one embodiment the natural material is selected from the group consisting of a bird eggshell, a tooth, a bone, a tusk, ivory, a pearl, nacre, or a calcified fossil. According to a preferred embodiment the natural material is a bird eggshell, preferably a quail eggshell, a chicken eggshell, a duck eggshell, a goose eggshell, or an ostrich eggshell. The eggshell may be provided separately or in form of an egg comprising the eggshell. However, any other natural material having at least one external surface comprising calcium carbonate may also be used.

According to the present invention, the natural material provided in step a) comprises at least one external surface comprising calcium carbonate. The calcium carbonate can be present in the at least one external surface only and/or can be distributed across the entire natural material. According to one embodiment the at least one external surface of the natural material and the remaining parts of the natural material have the same composition.

According to one embodiment the natural material comprises the calcium carbonate in an amount at least 1 wt.-%, based on the total weight of the natural material, preferably at least 5 wt.-%, more preferably at least 10 wt.-%, even more preferably at least 25 wt.-%, and most preferably at least 50 wt.-%. The amount of calcium carbonate in the at least one external surface can range from 1 to 100 wt.-%, based on the total weight of the at least one external surface, preferably from 5 to 99 wt.-%, more preferably from 25 to 98 wt.-%, and most preferably from 50 to 97 wt.-%.

Natural occurring calcium carbonate is known to exist as three types of crystal polymorphs: calcite, aragonite and vaterite. Calcite, the most common crystal polymorph, is considered to be the most stable crystal form of calcium carbonate. Less common is aragonite, which has a discrete or clustered needle orthorhombic crystal structure. Vaterite is the rarest calcium carbonate polymorph and is generally unstable. Natural calcium carbonate is mostly of the calcitic polymorph, which is said to be trigonal-rhombohedral and represents the most stable of the calcium carbonate polymorphs. Aragonite forms naturally in almost all mollusk shells, and as the calcareous endoskeleton of warm- and cold-water corals (Scleractinia) (see Wikipedia, The Free Encyclopedia, "Aragonite", 2016, August 25).

Depending on the type of natural material other compounds such as hydroxylapatite, proteins, or fats may be present.

A chicken egg, for example, may typically contain up to 97 wt.-% calcium carbonate crystals, which are stabilized by a protein matrix (see Hunton, Revista Brasileira de Ciência Avicola.2005, 7: 67-71).

Pearls and mollusc shells may typically contain 80 to 92 wt.-% calcium carbonate, which are stabilized by a protein matrix (see Wikipedia, The Free Encyclopedia, "Perle", 2016, August 29).

Nacre, also known as mother of pearl, is an organic-inorganic composite material produced by some molluscs as an inner shell layer, and may also makes up the outer coating of pearls. Nacre may be composed of about 95 wt.-% calcium carbonate and about 5 wt.-% proteins (see Wikipedia, The Free Encyclopedia, "Nacre", 2016, July 16).

The natural material provided in step a) may be further processed. For example, the natural material may heat treated or cold treated, washed with water or solvents, reshaped, or coloured.

### Method step b)

According to step b) of the method of the present invention, a liquid treatment composition comprising at least one acid is provided.

The liquid treatment composition may comprise any inorganic or organic acid that forms CO₂ when it reacts with calcium carbonate. According to one embodiment, the at least one acid is an organic acid, preferably a monocarboxylic, dicarboxylic or tricarboxylic acid.

According to one embodiment, the at least one acid is a strong acid having a pKₐ of 0 or less at 20°C. According to another embodiment, the at least one acid is a medium-strong acid having a pKₐ value from 0 to 2.5 at 20°C. If the pKₐ at 20°C is 0 or less, the acid is preferably selected from sulphuric acid, hydrochloric acid, or mixtures thereof. If the pKₐ at 20°C is from 0 to 2.5, the acid is preferably selected from H₂SO₃, H₃PO₄, oxalic acid, or mixtures thereof. However, acids having a pKₐ of more than 2.5 may also be used, for example, suberic acid, succinic acid, acetic acid, citric acid, formic acid, sulphamic acid, tartaric acid, benzoic acid, or phytic acid.

The at least one acid can also be an acidic salt, for example, HSO₄⁻ , H₂PO₄⁻ or HPO₄²⁻, being at least partially neutralized by a corresponding cation such as Li⁺, Na⁺, K⁺, Mg²⁺ or Ca²⁺. The at least one acid can also be a mixture of one or more acids and one or more acidic salts.

According to one embodiment of the present invention, the at least one acid is selected from the group consisting of hydrochloric acid, sulphuric acid, sulphurous acid, phosphoric acid, citric acid, oxalic acid, acetic acid, formic acid, sulphamic acid, tartaric acid, phytic acid, boric acid, succinic acid, suberic acid, benzoic acid, adipic acid, pimelic acid, azelaic acid, sebaic acid, isocitric acid, aconitic acid, propane-1,2,3-tricarboxylic acid, trimesic acid, glycolic acid, lactic acid, mandelic acid, acidic organosulphur compounds, acidic organophosphorus compounds, HSO₄⁻, H₂PO₄⁻ or HPO₄²⁻, being at least partially neutralized by a corresponding cation selected from Li⁺, Na⁺, K⁺, Mg²⁺ or Ca²⁺, and mixtures thereof. According to a preferred embodiment, the at least one acid is selected from the group consisting of hydrochloric acid, sulphuric acid, sulphurous acid, phosphoric acid, oxalic acid, boric acid, suberic acid, succinic acid, sulphamic acid, tartaric acid, and mixtures thereof, more preferably the at least one acid is selected from the group consisting of sulphuric acid, phosphoric acid, boric acid, suberic acid, sulphamic acid, tartaric acid, and mixtures thereof, and most preferably the at least one acid is phosphoric acid and/or sulphuric acid.

Acidic organosulphur compounds may be selected from sulphonic acids such as Nafion, p-toluenesulphonic acid, methanesulphonic acid, thiocarboxylic acids, sulphinic acids and/or sulphenic acids. Examples for acidic organophosphorus compounds are aminomethylphosphonic acid, 1-hydroxyethylidene-1,1-diphosphonic acid (HEDP), amino tris(methylenephosphonic acid) (ATMP), ethylenediamine tetra(methylene phosphonic acid) (EDTMP), tetramethylenediamine tetra(methylene phosphonic acid) (TDTMP), hexamethylenediamine tetra(methylene phosphonic acid) (HDTMP), diethylenetriamine penta(methylene phosphonic acid) (DTPMP), phosphonobutane-tricarboxylic acid (PBTC), N-(phosphonomethyl)iminodiacetic acid (PMIDA), 2-carboxyethyl phosphonic acid (CEPA), 2-hydroxyphosphonocarboxylic acid (HPAA), amino-tris-(methylenephosphonic acid) (AMP), or di-(2-ethylhexyl)phosphoric acid.

The at least one acid may consist of only one type of acid. Alternatively, the at least one acid can consist of two or more types of acids.

The at least one acid may be applied in concentrated form or in diluted form. According to one embodiment of the present invention, the liquid treatment composition comprises at least one acid and water. According to another embodiment of the present invention, the liquid treatment composition comprises at least one acid and a solvent. According to another embodiment of the present invention, the liquid treatment composition comprises at least one acid, water, and a solvent. Suitable solvents are known in the art and are, for example, aliphatic alcohols, ethers and diethers having from 4 to 14 carbon atoms, glycols, alkoxylated glycols, glycol ethers, alkoxylated aromatic alcohols, aromatic alcohols, mixtures thereof, or mixtures thereof with water. According to one embodiment, the solvent is methanol, ethanol, propanol, or a mixture thereof, and preferably ethanol,

According to one embodiment, the liquid treatment composition comprises the at least one acid in an amount from 0.1 to 100 wt.-%, based on the total weight of the liquid treatment composition, preferably in an amount from 1 to 80 wt.-%, more preferably in an amount from 3 to 60 wt.-%, and most preferably in an amount from 10 to 50 wt.-%.

According to one embodiment, the liquid treatment composition comprises the acid in a range of 20 to 80 wt.-%, and preferably in the range of 30 to 50 wt.-%, water in the range of 15 to 75 wt.-%, and preferably in the range of 25 to 45 wt.-%, and the solvent in the range of 5 to 50 wt.-%, and preferably in the range of 15 to 35 wt.-%. According to one embodiment, the at least one acid is phosphoric acid and/or sulphuric acid, preferably phosphoric acid, and/or the solvent is methanol, ethanol, propanol, or a mixture thereof, and preferably ethanol.

According to one exemplary embodiment, the liquid treatment composition comprises phosphoric acid, ethanol, and water, preferably the liquid treatment composition comprises 30 to 50 wt.-% phosphoric acid, 10 to 30 wt.-% ethanol, and 20 to 40 wt.-% water, based on the total weight of the liquid treatment composition. According to another exemplary embodiment, the liquid treatment composition comprises 20 to 40 vol.-% phosphoric acid, 20 to 40 vol.-% ethanol, and 20 to 40 vol.-% water, based on the total volume of the liquid treatment composition.

According to one exemplary embodiment, the liquid treatment composition comprises sulphuric acid, ethanol, and water, preferably the liquid treatment composition comprises 1 to 10 wt.-% sulphuric acid, 10 to 30 wt.-% ethanol, and 70 to 90 wt.-% water, based on the total weight of the liquid treatment composition. According to another exemplary embodiment, the liquid treatment composition comprises 10 to 30 vol.-% sulphuric acid, 10 to 30 vol.-% ethanol, and 50 to 80 vol.-% water, based on the total volume of the liquid treatment composition.

In addition to the at least one acid, the liquid treatment composition may further comprise a surfactant, a dispersant, an ink, a dye, a fluorescent dye, a phosphorescent dye, an ultraviolet absorbing dye, a near infrared absorbing dye, a thermochromic dye, a halochromic dye, metal ions, transition metal ions, magnetic particles, or a mixture thereof. Such additional compounds can equip the created pattern with additional features, such as specific colours, specific light absorbing properties, electromagnetic radiation reflection properties, fluorescence properties, phosphorescence properties, magnetic properties, or electric conductivity.

According to an alternative embodiment, a dry treatment composition is provided in step b) instead of a liquid treatment composition. In said case, the dry treatment composition may comprise a deliquescent acid. The term "deliquescent acid" as used herein refers to an acid in solid form that has a high affinity for moisture and can collect gaseous water molecules from the atmosphere to form a mixture of the solid acid and liquid water, or an aqueous solution of the acid, until the substance is dissolved (cf. definition of "deliquescence", IUPAC, Compendium of Chemical Terminology Goldbook, version 2.3.3, 2014). The deliquescent acid may absorb gaseous water molecules from the surrounding atmosphere, in which the method is carried out, and/or from the natural material to be treated. These absorbed water molecules may be sufficient to allow the formation of a surface-modified region, i.e. a pattern, on the natural material. Alternatively or additionally, water may be added from an external source to enable the formation of the pattern. An example of a deliquescent acid that can be applied in solid form is phosphonic acid.

### Method step c)

According to method step c), the liquid treatment composition is applied onto the at least one external surface of the natural material to form a pattern. Thereby, at least one surface-modified region is formed on or within the at least external surface, which is visually, haptically, or spectroscopically detectable.

The liquid treatment composition can be applied onto at least one external surface by any suitable method known in the art.

According to one embodiment, the liquid treatment composition is applied by spray coating, inkjet printing, offset printing, flexographic printing, screen printing, plotting, contact stamping, rotogravure printing, spin coating, reverse (counterrotating) gravure coating, slot coating, curtain coating, slide bed coating, film press, metered film press, blade coating, brush coating and/or a pencil. Preferably, the liquid treatment composition is applied by spray coating. According to one embodiment the spray coating is combined with a shutter in order to create a pattern. According to another embodiment, the liquid treatment composition is applied by inkjet printing, preferably by continuous inkjet printing, intermittent inkjet printing and/or drop-on-demand inkjet printing.

The inkjet printing technology may provide the possibility to place very small droplets on the external surface, which allows to create high resolution patterns on and/or within the coating layer. According to one embodiment, the liquid treatment composition is applied to the external surface in form of droplets. Depending on the inkjet printer, the droplets may have a volume in the range from 10 µl down to 0.5 pl. According to one embodiment, the droplets have a volume of less than or equal to 10 µl, preferably less than or equal to 100 nl, more preferably less than or equal to 1 nl, even more preferably less than or equal to 10 pl, and most preferably less than or equal to 0.5 pl. For example, the droplets may have a volume from 10 µl down to 1 µl, from 1 µl to 100 nl, from 100 nl to 10 nl, from 10 nl to 1 nl, from 1 nl to 100 pl, from 100 pl to 10 pl, from 10 pl to 1 pl, or of about 0.5 pl.

According to one embodiment, the liquid treatment composition is deposited by inkjet printing with a drop spacing of less than or equal to 1 000 µm. According to one embodiment the drop spacing is from 10 nm to 500 µm, preferably from 100 nm to 300 µm, more preferably from 1 µm to 200 µm, and most preferably from 5 µm to 100 µm. According to another embodiment, the drop spacing is less than 800 µm, more preferably less than 600 µm, even more preferably less than 400 µm, and most preferably less than 80 µm. According to still another embodiment, the drop spacing is less than 500 nm, more preferably less than 300 nm, even more preferably less than 200 nm, and most preferably less than 80 nm. The drop spacing can also be zero, which means that the drops perfectly coincident.

According to another embodiment, the liquid treatment composition is applied to the at least one external surface in form of droplets to form surface-modified pixels on and/or within the at least one external surface. The pixels may have a diameter of less than 5 mm, preferably less 1 000 µm, more preferably less than 200 µm, and most preferably less than 100 µm, or even less than 10 µm.

The inventors surprisingly found that by using the inkjet printing technology very small drops of the treatment composition can be applied onto the at least one external surface, which provides to the possibility of converting even small areas of the external surface very precisely and locally without affecting the surrounding surface structure. Thereby, high resolution patterns can be created on the at least one external surface. Moreover, the method of the present invention has the advantage that it can be carried out with conventional inkjet printers just by replacing the conventional ink by the liquid treatment composition of the present invention. Thus, the method of the present invention can be implemented in existing print facilities and does not require cost-intensive and time-consuming modifications of existing inkjet printing lines.

The liquid treatment composition can be applied onto the at least one external surface by depositing the treatment composition onto the top of the at least one external surface. The application of the liquid treatment composition onto the at least one external surface can be carried out at a surface temperature of the natural material, which is at room temperature, i.e. at a temperature of 20±2°C, or at an elevated temperature, for example, at about 70°C. Carrying out method step c) at an elevated temperature may enhance the drying of the liquid treatment composition, and, hence, may reduce production time. According to one embodiment, method step c) is carried out at a surface temperature of more than 5°C, preferably more than 10°C, more preferably more than 15°C, and most preferably more than 20°C. According to one embodiment, method step c) is carried out at a surface temperature which is in the range from 5 to 120°C, more preferably in the range from 10 to 100°C, more preferably in the range from 15 to 90°C, and most preferably in the range from 20 to 80°C.

According to the method of the present invention, the liquid treatment composition is applied onto at least one external surface of the natural material in form of a pattern. The pattern can be an one-dimensional bar code, a two-dimensional bar code, a three-dimensional bar code, a security mark, a label, a number, a letter, an alphanumeric symbol, a logo, an image, a shape, a design, a braille marking, or a combination thereof. The pattern may have a resolution of more than 10 dpi, preferably more than 50 dpi, more preferably more than 100 dpi, even more preferably more than 1 000 dpi, and most preferably more than 10 000 dpi, wherein dpi means dots per inch.

According to another embodiment, the liquid treatment composition is applied to the at least one external surface in form of a pattern of repetitive elements, preferably selected from the group consisting of circles, dots, triangles, rectangles, squares, or lines.

Without being bound to any theory, it is believed that by the application of the liquid treatment composition to the external surface, the calcium carbonate of the external surface reacts with the acid included in the treatment composition. Thereby the calcium carbonate is at least partially converted into an acid salt, which has a different chemical composition and crystal structure compared to the original material.

According to one embodiment, the formed pattern comprises a non-carbonate calcium salt, preferably a water-insoluble non-carbonate calcium salt. In the meaning of the present invention "water-insoluble" materials are defined as materials which, when mixed with deionised water and filtered on a filter having a 0.2 µm pore size at 20°C to recover the liquid filtrate, provide less than or equal to 0.1 g of recovered solid material following evaporation at 95 to 100°C of 100 g of said liquid filtrate. "Water-soluble" materials are defined as materials leading to the recovery of greater than 0.1 g of recovered solid material following evaporation at 95 to 100°C of 100 g of said liquid filtrate.

According to one embodiment of the present invention, the liquid treatment composition comprises phosphoric acid, and the obtained pattern comprises a water-insoluble calcium phosphate salt, for example, hydroxyapatite, calcium hydrogen phosphate hydrate, calcium phosphate, brushite, and combinations thereof, preferably calcium phosphate and/or brushite.

According to another embodiment of the present invention, the liquid treatment composition comprises sulphuric acid, and the obtained pattern comprises gypsum.

### Additional process steps

According to one embodiment of the invention, the method further comprises a step d) of applying a protective layer and/or a printing layer above the formed pattern. The protective layer and/or a printing layer can be a transparent layer, a semi-transparent layer, or an opaque layer.

According to one embodiment of the invention, the method further comprises a step d) of applying a protective layer above the pattern.

The protective layer can be made from any material, which is suitable to protect the underlying pattern against unwanted environmental impacts or mechanical wear. Examples for suitable materials are resins, varnishes, silicones, polymers, metal foils, or cellulose-based materials.

The protective layer may be applied above the pattern by any method known in the art and suitable for the material of the protective layer. Suitable methods are, for example, air knife coating, electrostatic coating, metering size press, film coating, spray coating, extrusion coating, wound wire rod coating, slot coating, slide hopper coating, gravure, curtain coating, high speed coating, lamination, printing, adhesive bonding, stamping, and the like.

According to one embodiment of the present invention, the protective layer is applied above the pattern and the surrounding external surface.

According to one embodiment, the protective layer is a removable protective layer.

According to another embodiment of the invention, the method further comprises a step d) of applying a printing layer above the pattern.

The printing layer can be applied by any suitable printing technique known to the skilled person. For example, the printing layer can be created by inkjet printing, offset printing, rotogravure, flexography, or screen printing. According to one embodiment, the printing layer is an inkjet printing layer, an offset printing layer, a rotogravure printing layer, or a flexography printing layer. It will be appreciated by the skilled person that the amount of ink applied by printing techniques such as offset or rotogravure, is still far below the thickness of the surface-modified area, i.e. the formed pattern. In other words, the amount of ink is too low in order to fill the voids and to cause disappearing of the pattern. Thus, a pattern, which is partially or completely covered by a printing layer, may be still visible when viewed from a second angle relative to the surface of the natural product.

According to one embodiment of the present invention, method step c) is carried out two or more times using a different or the same liquid treatment composition. Thereby, different patterns with different properties can be created.

### The pattern formed on the natural material of human or animal origin

According to one aspect of the present invention, a natural material of human or animal origin comprising a pattern, obtainable by a method according to the present invention, is provided. As described above, the natural material of human or animal origin comprises at least one external surface comprising calcium carbonate.

According to one embodiment, a natural material of human or animal origin comprising a pattern is provided, wherein the natural material of human or animal origin comprises at least one external surface comprising calcium carbonate, and wherein the pattern comprises an acid salt of calcium carbonate. According to one embodiment the acid salt is a water-insoluble non-carbonate calcium salt, preferably a calcium phosphate salt and/or a calcium sulphate.

The inventors surprisingly found that by the inventive method a pattern can be formed on calcium carbonate-comprising natural materials of human or animal origin. The formed pattern can differ from the untreated external surface in tactility, surface roughness, gloss, light absorption, electromagnetic radiation reflection, fluorescence, phosphorescence, magnetic property, electric conductivity, whiteness and/or brightness. These distinguishable properties can be utilized to detect the pattern visually, tactilely, or at alternative conditions, for example, under UV light or near infrared light using an appropriate detector, and can render it machine readable.

Furthermore, the inventors surprisingly found that the formed pattern is permanent and difficult to modify. Even if the formed pattern is scratched away, the surface-modification may be still detectable by a spectroscopic method such as X-ray fluorescence spectroscopy or infrared spectroscopy.

The inventors also found that, if the colour of the external surface of natural material and the colour of the formed pattern are the same, the formed pattern may only visible when viewed under specific angles relative to the surface of the natural material, while it may be partially hidden when viewed under other angles relative to the surface of the natural material. In other words, the present invention provides the possibility to create a hidden pattern on a natural material, which may not be visible on a first glance, but can be easily detected when varying the viewing angle. Without being bound to any theory, the inventors believe that due to different light scattering properties of the hidden pattern and the surrounding external surface, the hidden pattern is invisible when viewed at a first angle relative to the surface of the substrate, and visible when viewed from a second angle relative to the surface of the substrate. Therefore, while a potential counterfeiter may have no knowledge of the presence of the pattern, a trained person can identify the pattern immediately just by visual inspection without using any special tools.

According to one embodiment, the pattern is a hidden pattern, which is invisible when viewed at a first angle relative to the at least one external surface of the natural material, and visible when viewed from a second angle relative to the at least one external surface of the natural material. According to a further embodiment, a natural material comprising a hidden pattern is provided, wherein the natural material comprises at least one external surface comprising calcium carbonate, and the formed pattern comprises a non-carbonate calcium salt.

According to one embodiment, the hidden pattern is invisible when viewed at an angle from 80° to 100°, preferably about 90°, relative to the external surface of the natural material, and visible when viewed at an angle from 10° to 50°, preferably from 20 to 30°, relative to the external surface of the natural material. Preferably, the hidden pattern is viewed under ambient light. The surface of the natural material relative to which the viewing angle is defined is the surface on which the hidden pattern is applied, i.e. the at least one external surface of the natural material. According to one embodiment, the hidden pattern is invisible to the un-aided or naked human eye when viewed at a first angle relative to the surface under ambient light, and visible to the un-aided or naked human eye when viewed at a second angle relative to the surface under ambient light.

According to one embodiment, the hidden pattern is invisible when illuminated at an angle from 80° to 100°, preferably about 90°, relative to the surface of the substrate, and visible when illuminated at an angle from 10° to 50°, preferably from 20 to 30°, relative to the external surface of the natural material. According to one embodiment, the hidden pattern is invisible to the un-aided or naked human eye when illuminated at a first angle relative to the surface of the substrate, and visible to the un-aided or naked human eye when illuminated at a second angle relative to the external surface of the natural material.

A further advantage of the present invention is that the created pattern can have an embossed structure due to the conversion of the calcium carbonate into the corresponding acid salt. This may provide the possibility of haptically detecting the pattern on a natural material, which could be particular advantageous for blind people and partially sighted users. Thus, the method of the present invention may also be used to create a tactile pattern on a natural material. For example, the method of the present invention may be used to create tactile graphics such as tactile pictures, tactile diagrams, tactile maps, or tactile graphs, or it may be used to create a braille marking such as a braille text on a natural material.

According to one embodiment a substrate obtainable by a method according to the present invention is provided, wherein the pattern is a tactile pattern, and preferably a braille marking. According to another embodiment, a method for creating a tactile pattern is provided, comprising the steps a) to c) of the present invention.

Moreover, the present invention provides the possibility to equip said pattern with additional functionalities by adding further compounds to the liquid treatment composition. For example, the pattern can be detected under UV light by adding a UV absorbing dye or can be rendered machine readable by adding magnetic particles or electrically conductive particles.

According to one embodiment the pattern differs from the at least one external surface in tactility, surface roughness, gloss, light absorption, electromagnetic radiation reflection, fluorescence, phosphorescence, magnetic property, electric conductivity, whiteness and/or brightness.

According to one embodiment, the pattern comprises a security feature and/or a decorative feature and/or a labelling, preferably an one-dimensional bar code, a two-dimensional bar code, a three-dimensional bar code, a security mark, a label, a number, a letter, an alphanumeric symbol, a logo, an image, a shape, a design, or a combination thereof. In the present context, term "security feature" means that the feature is used for the purpose of authentication, while "decorative feature" means that the feature is provided primarily for authentication, but rather primarily for a graphical or decorative purpose.

According to one embodiment, the pattern displays variable information. According to another embodiment, the variable information comprises covert information and/or overt information. According to one embodiment, the pattern comprises an embossed structure. The pattern may also be combined with security features such as optically variable features, embossing, watermarks, threads, or holograms.

According to a further embodiment the natural material of human or animal origin comprising a pattern, obtainable by a method according to the present invention, is used in tactile applications, braille applications, labelling applications, security applications, in overt security elements, in covert security elements, in microlettering, in micro imaging, in decorative applications, in artistic applications, in visual applications, or in packaging applications.

The scope and interest of the present invention will be better understood based on the following figures and examples which are intended to illustrate certain embodiments of the present invention and are non-limitative.

### Description of the figures

Fig. 1 shows a digital image of a white and a brown chicken egg shell, on which a pattern in form of a logo has been formed using the method of the present invention.
Fig. 2 shows a digital image of a brown chicken egg shell (top) and a white chicken egg shell (bottom), wherein on both egg shells a pattern in form of a QR-code has been formed using the method of the present invention.
Fig. 3 shows a scanning electron microscope (SEM) micrograph of a section of a QR-code formed on a chicken egg shell by the method of the present invention.
Fig. 4 shows a scanning electron microscope (SEM) micrograph of a cross section of a pattern formed on a chicken egg shell by the method of the present invention.
Fig. 5 shows a digital image of a quail egg shell, on which a pattern in form of a logo has been formed using the method of the present invention.
Fig. 6 shows a digital image of the nacre-coated side of an abalone shell, on which a pattern in form of a logo has been formed using the method of the present invention.
Fig. 7 shows a scanning electron microscope (SEM) micrograph of a section of a logo formed on the nacre-coated side of an abalone shell by the method of the present invention.
Fig. 8 shows a digital image of a bone sample, on which a pattern in form of a logo has been formed using the method of the present invention.
Fig. 9 shows a scanning electron microscope (SEM) micrograph of a section of a logo formed on a bone sample by the method of the present invention.

### Examples

In the following, measurement methods and materials implemented in the examples are described.

### 1. Methods

### Digital images

Digital images of the prepared samples were recorded with an EOS 600D digital camera equipped with a Canon Macro lens, EF-S 60 mm, 1:2.8 USM (Canon Japan).

### Scanning electron microscope (SEM) micrographs

The prepared samples were examined by a Sigma VP field emission scanning electron microscope (Carl Zeiss AG, Germany) and a variable pressure secondary electron detector (VPSE) with a chamber pressure of about 50 Pa.

### 2. Materials

### Natural materials

The tested substrates were: chicken egg shells (white, brown), quail egg, abalone shell, and bone.

Chicken and quail eggs are commercially available from local grocery stores or supermarkets. Abalone shells and bone samples for testing purposes are commercially available from Stewart-MacDonald, Athens, OH 45701, USA.

### Liquid treatment composition

41 wt.-% phosphoric acid, 23 wt.-% ethanol, and 36 wt.-% water (wt.-% are based on the total weight of the liquid treatment composition).

### 3. Examples

Patterned samples were prepared by applying the liquid treatment composition on the above-mentioned natural materials in form of a predetermined pattern (logo "mozaiq" or QR-code) with an inkjet printer (Dimatix DMP 2831, Fujifilm Dimatix Inc., USA) with 10 pl (pico litre) droplet size at varying droplet spaces between 10 to 30 µm.

### Example 1 - logo and QR-code on chicken egg

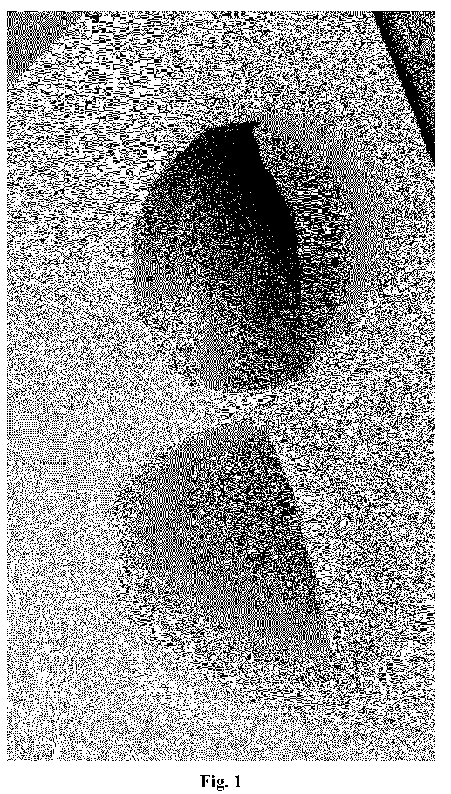

The logo "mozaiq" was printed on white and brown egg shells with a drop spacing of 15 µm. As can be gathered from the digital image in Fig. 1, the logo is clearly visible on the printed egg shells.

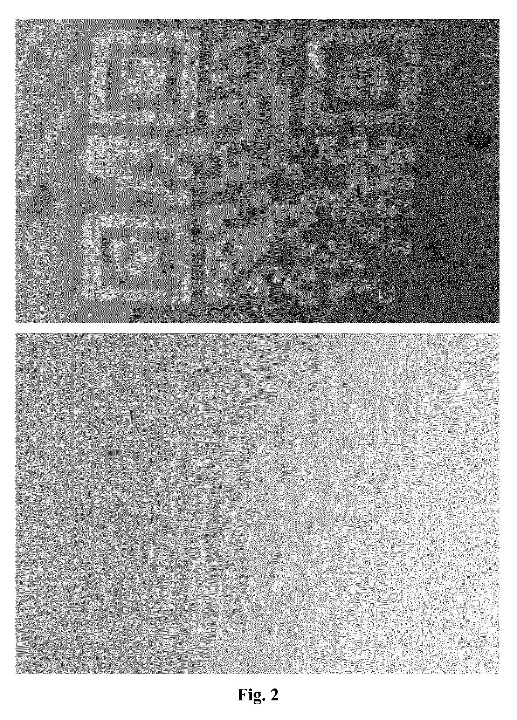

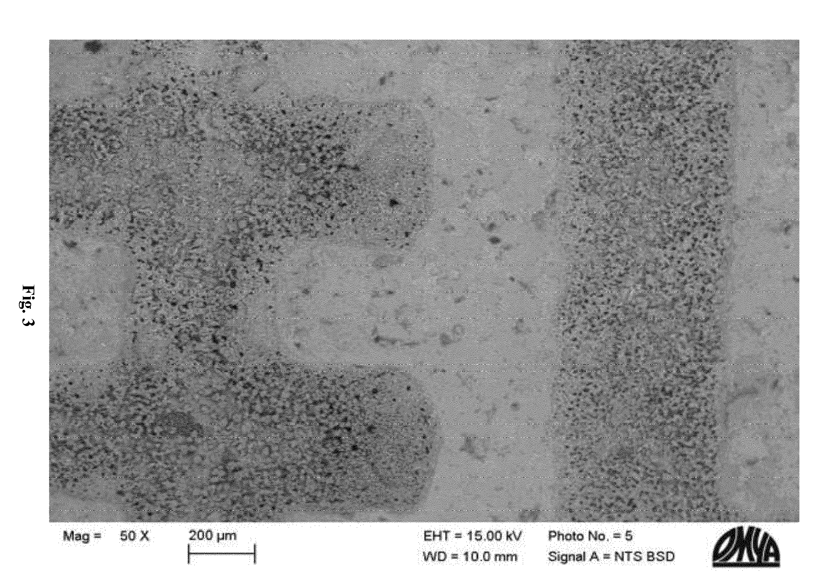

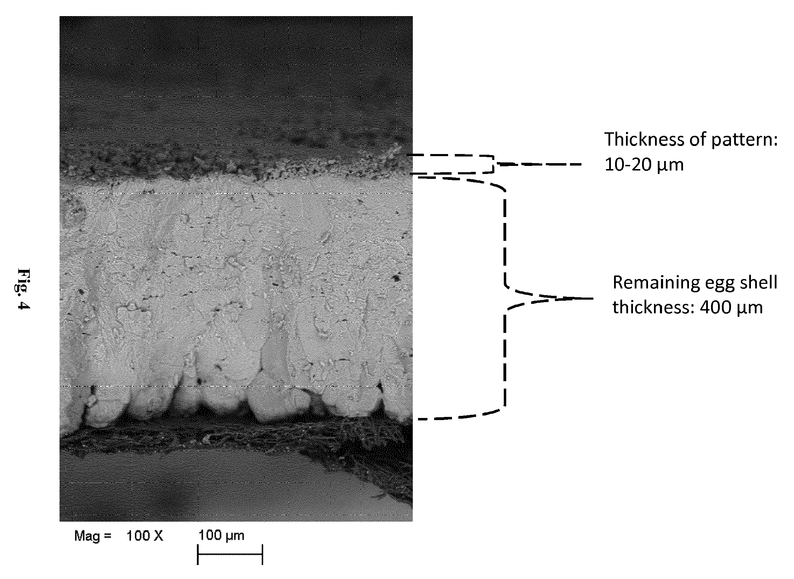

A QR-code was printed on white and brown egg shells with a drop spacing of 15 µm. As can be gathered from the digital image in Fig. 2, the QR-code is clearly visible on the printed egg shells. A SEM micrograph of a section of said QR-code is shown in Fig. 3. Fig. 4 presents a SEM micrograph of a cross section of the printed egg shell. As can be seen from said figure, the pattern formed on the surface of the egg shell has only a thickness of about 10 to 20 µm, while the remaining egg shell has a thickness of about 400 µm. Said figure confirms that the formed pattern does not enter deep into the egg shell, and thus, is safe from a food and health perspective.

### Example 2 - logo on quail egg

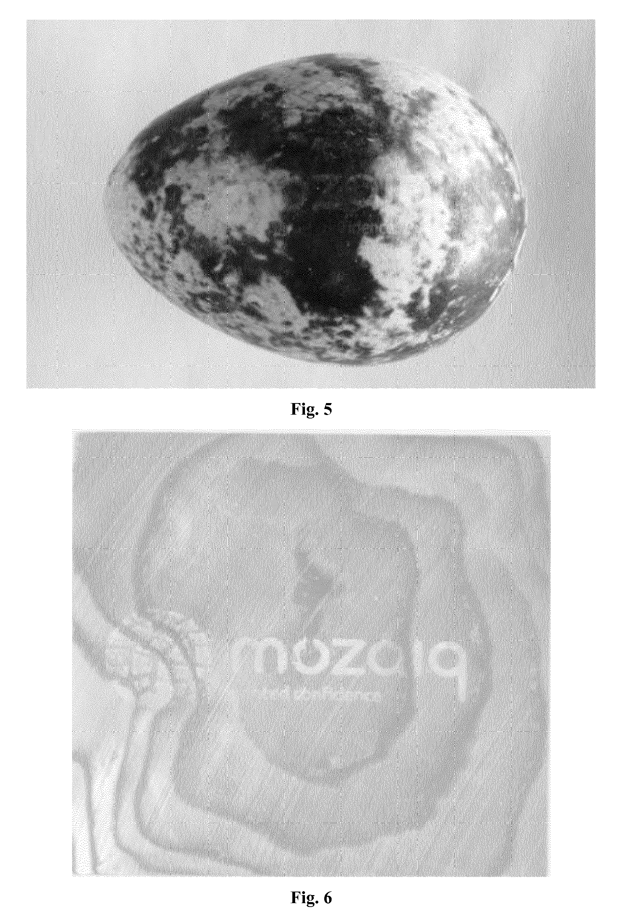

The logo "mozaiq" was printed on a quail egg with a drop spacing of 15 µm. As can be gathered from the digital image in Fig. 5, the logo is clearly visible on the printed egg shell.

### Example 3 - logo on abalone shell

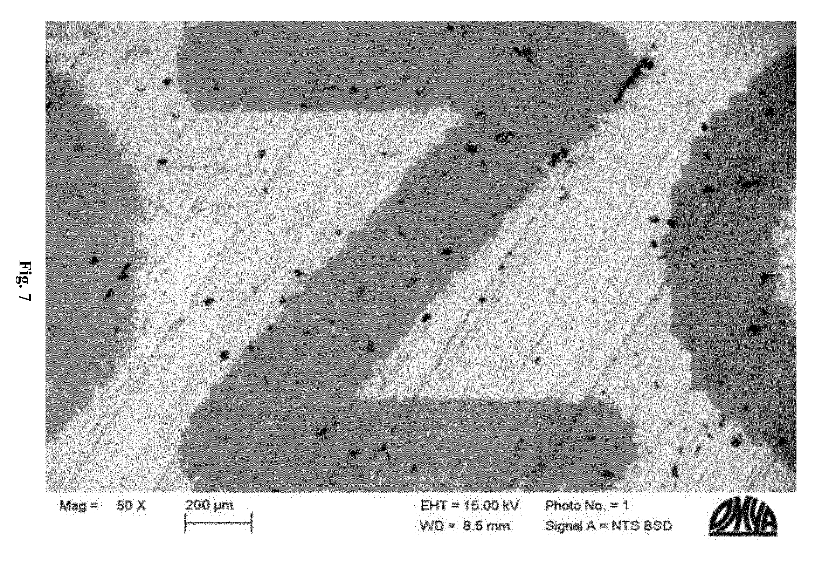

The logo "mozaiq" was printed on the nacre-coated side of an abalone shell with a drop spacing of 30 µm. As can be gathered from the digital image in Fig. 6, the logo is clearly visible on the printed abalone surface. A SEM micrograph of a section of said logo showing the letter "Z" is presented in Fig. 7.

### Example 4 - logo on bone

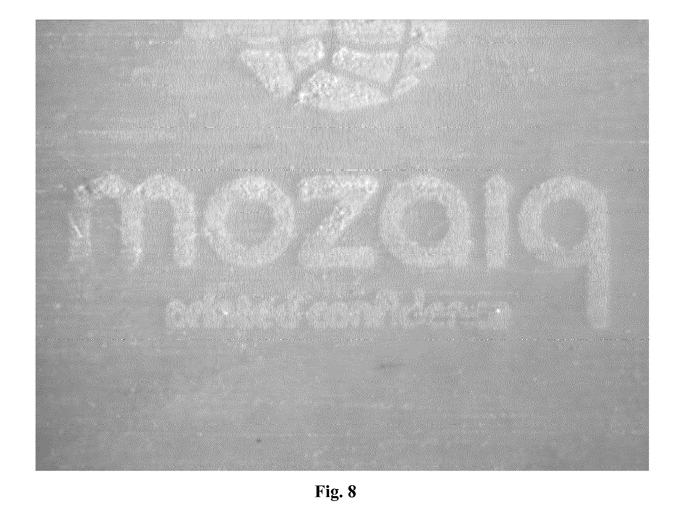

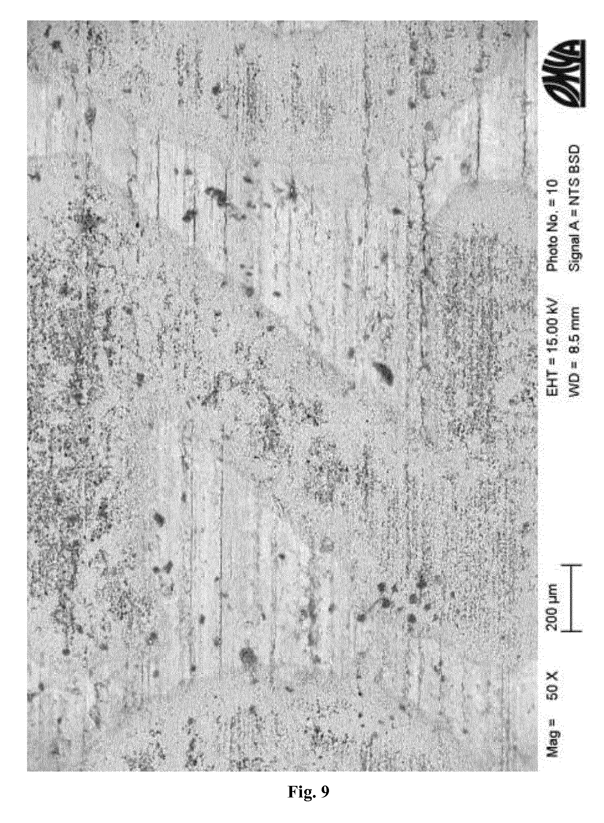

The logo "mozaiq" was printed on a bone sample with a drop spacing of 20 µm. As can be gathered from the digital image in Fig. 8, the logo is clearly visible on the printed bone surface. A SEM micrograph of a section of said logo showing the letter "Z" is presented in Fig. 9.

## Claims

1. A method for creating a pattern on a natural material of human or animal origin comprising the following steps:
a) providing a natural material of human or animal origin, wherein the natural material comprises at least one external surface comprising calcium carbonate,
b) providing a liquid treatment composition comprising at least one acid, and
c) applying the liquid treatment composition onto the at least one external surface of the natural material to form a pattern.

2. The method of claim 1, wherein the natural material is selected from the group consisting of a reptile eggshell, a bird eggshell, a monotreme eggshell, a tooth, a bone, a tusk, ivory, a pearl, nacre, a mollusc shell, a cuttlebone, a gladius, a corallite, a crustacean exoskeleton, or a calcified fossil, preferably the natural material is selected from the group consisting of a bird eggshell, a tooth, a bone, a tusk, ivory, a pearl, nacre, or a calcified fossil, more preferably the natural material is a bird eggshell, and most preferably the natural material is a quail eggshell, a chicken eggshell, a duck eggshell, a goose eggshell, or an ostrich eggshell..

3. The method of any one of the preceding claims, wherein the natural material comprises the calcium carbonate in an amount at least 1 wt.-%, based on the total weight of the natural material, preferably at least 5 wt.-%, more preferably at least 10 wt.-%, even more preferably at least 25 wt.-%, and most preferably at least 50 wt.-%.

4. The method of any one of the preceding claims, wherein the at least one acid is selected from the group consisting of hydrochloric acid, sulphuric acid, sulphurous acid, phosphoric acid, citric acid, oxalic acid, acetic acid, formic acid, sulphamic acid, tartaric acid, phytic acid, boric acid, succinic acid, suberic acid, benzoic acid, adipic acid, pimelic acid, azelaic acid, sebaic acid, isocitric acid, aconitic acid, propane-1,2,3-tricarboxylic acid, trimesic acid, glycolic acid, lactic acid, mandelic acid, acidic organosulfur compounds, acidic organophosphorus compounds, HSO₄⁻, H₂PO₄⁻ or HPO₄²⁻, being at least partially neutralized by a corresponding cation selected from Li⁺, Na⁺, K⁺, Mg²⁺ or Ca²⁺, and mixtures thereof, preferably the at least one acid is selected from the group consisting of hydrochloric acid, sulphuric acid, sulphurous acid, phosphoric acid, oxalic acid, boric acid, suberic acid, succinic acid, sulphamic acid, tartaric acid, and mixtures thereof, more preferably the at least one acid is selected from the group consisting of sulphuric acid, phosphoric acid, boric acid, suberic acid, sulphamic acid, tartaric acid, and mixtures thereof, and most preferably the at least one acid is phosphoric acid and/or sulphuric acid.

5. The method of any one of the preceding claims, wherein the liquid treatment composition further comprises a surfactant, an ink, a dye, fluorescent dye, a phosphorescent dye, an ultraviolet absorbing dye, a near infrared absorbing dye, a thermochromic dye, a halochromic dye, metal ions, transition metal ions, magnetic particles, or a mixture thereof.

6. The method of any one of the preceding claims, wherein the liquid treatment composition comprises the at least one acid in an amount from 0.1 to 100 wt.-%, based on the total weight of the liquid treatment composition, preferably in an amount from 1 to 80 wt.-%, more preferably in an amount from 3 to 60 wt.-%, and most preferably in an amount from 10 to 50 wt.-%.

7. The method of any one of the preceding claims, wherein the pattern is an one-dimensional bar code, a two-dimensional bar code, a three-dimensional bar code, a security mark, a label, a number, a letter, an alphanumeric symbol, a logo, an image, a shape, a design, a braille marking, or a combination thereof.

8. The method of any one of the preceding claims, wherein the liquid treatment composition is applied by spray coating, inkjet printing, offset printing, flexographic printing, screen printing, plotting, contact stamping, rotogravure printing, spin coating, reverse gravure coating, slot coating, curtain coating, slide bed coating, film press, metered film press, blade coating, brush coating and/or a pencil, preferably by inkjet printing or spray coating.

9. The method of any one of the preceding claims, wherein the method further comprises a step d) of applying a protective layer and/or a printing layer above the pattern.

10. A natural material of human or animal origin comprising a pattern, obtainable by a method according to any one of claims 1 to 9.

11. The natural material of claim 10, wherein the pattern is a hidden pattern, which is invisible when viewed at a first angle relative to the at least one external surface of the natural material, and visible when viewed from a second angle relative to the at least one external surface of the natural material.

12. The natural material of claim 10 or 11, wherein the pattern differs from the at least one external surface in surface roughness, gloss, light absorption, electromagnetic radiation reflection, fluorescence, phosphorescence, magnetic property, electric conductivity, whiteness and/or brightness.

13. The natural material of any one of claims 10 to 12, wherein the pattern comprises a security feature and/or a decorative feature and/or a labelling, preferably an one-dimensional bar code, a two-dimensional bar code, a three-dimensional bar code, a security mark, a label, a number, a letter, an alphanumeric symbol, a logo, an image, a shape, a design, or a combination thereof.

14. The natural material of any one of claims 10 to 13, wherein the pattern is a tactile pattern, and preferably a braille marking.

15. Use of a natural material according to any one of claims 10 to 14 in tactile applications, braille applications, labelling applications, security applications, in overt security elements, in covert security elements, in microlettering, in micro imaging, in decorative applications, in artistic applications, in visual applications, or in packaging applications.
